# EUROPEAN PATENT SPECIFICATION

(11) **EP 1 980 586 B1**
(45) Date of publication and mention of the grant of the patent: **26.01.2011**
(21) Application number: 08152978.6
(22) Date of filing: 19.03.2008
(51) Int. Cl.: C08G 75/20, C08G 75/23

(54) **High-performance polysulfone composition**
Hochleistungs-Polysulfon-Zusammensetzung
Compositions de polysulfone haute performance

(30) Priority: 12.04.2007 US 911318 P
(43) Date of publication of application: 15.10.2008
(73) Proprietor: Solvay Advanced Polymers, LLC, Alpharetta, GA 30005 (US)
(72) Inventor: Weinberg, Shari, Atlanta, Fulton, GA 30324 (US); El-Hibri, Mohammad Jamal, Atlanta, GA 30328 (US)
(74) Representative: Jacques, Philippe

(56) References cited:
- EP-A- 1 142 936
- WO-A-2007/039633
- US-A- 3 742 087

## Description

The present invention relates to a high-performance polysulfone composition, which is in general especially well suited notably for applications where polysulfones with low moisture permeability are needed.

Sulfone polymers are among the most performing amorphous engineering polymers. They have been valued for years because of their excellent optical clarity, high tensile strength, good dimensional stability, thermoformability, outstanding toughness, fairly good environmental stress cracking resistance, thermal stability and resistance to hydrolysis by steam or hot water. As a consequence thereof, sulfone polymers have been used in numerous and diverse applications including gas separation membranes, specialized medical devices and electronic applications.

Certain demanding medical devices applications such as tubes, suction systems, medical packaging applications and vials require transparency, low fluids permeability (such as blood, saliva, and urine), low moisture absorption and possibly flexibility while withstanding sterilization conditions.

Other applications such as food packaging applications require transparency, flexibility and low permeability to moisture. This last property is critical in achieving the desired quality, safety, and shelf-life for the products.

Contact lenses require regular cleaning and disinfecting in order to retain clear vision and prevent discomfort and infections by various microorganisms including bacteria, fungi and *Acanthamoeba,* that form a biofilm on the lens surface. There are a number of cleaning agents that can be used to perform these tasks including saline solution, hydrogen peroxide solution, enzymes, surfactants, preservatives such as thimerosal, benzalkonium chloride, benzyl alcohol, and other compounds. Contact lens cases are generally filled with aqueous solutions of such cleaning agents to store the contact lenses overnight. Contact lens cases should thus be made of a material that resist to permanent contact with water and the cleaning agents as above described as well as to sterilization conditions while featuring low moisture permeability and absorption. It would also be desirable to make available contact lens cases that, in addition to the previously mentioned requirements, could be transparent and flexible as well.

While sulfone polymers have high flexibility, good resistance to sterilization conditions and transparency, they are not as efficient as desirable as moisture barriers since their permeability to moisture is higher than desirable.

Materials permeability to moisture is characterized by the "Moisture Vapor Transmission Rate" (MVTR), which is a measure of the passage of water vapor through a material. It is also known as WVTR "Water Vapor Transmission Rate".

There is thus a need for providing a composition of sulfone polymers that would be better adapted for applications where a low permeability to moisture is necessary, while retaining the beneficial properties of the sulfone polymers at a high level. More precisely, there is a need for providing a sulfone polymer composition with a reduced rate of moisture vapor transmission (MVTR), relative to the sulfone polymer taken alone, while maintaining all the beneficial properties of the prior art polysulfone compositions at a very high level, in particular their mechanical properties (such as their flexibility), their withstand to steam sterilization and their transparency. Such composition should be advantageously especially well suited for making the food and contact lens packaging as well as the medical devices as above described.

On the other hand, semi-aromatic polyesters like poly(ethylene terephthalate) and poly(ethylene naphthalate), while exhibiting notably limited mechanical and thermal performance, have found extensive application in rigid and flexible packaging, notably because of their good moisture and gas barrier properties along with their excellent optical properties. However, semi-aromatic polyesters feature relatively poor mechanical properties, and in particular unsatisfactory flexibility, for some specific applications.

EP 1142936 A1 describes biaxially oriented films comprising a polymer alloy composed of polyester (such as poly(ethylene naphthalate) and poly(ethylene terephthalate)) and a thermoplastic resin other than polyester as essential components (such as polyimide, polysulfone and polyethersulfone) exhibiting an excellent electromagnetic conversion property and traveling performance for a magnetic head, particularly when used as a base film for magnetic recording media.

In particular, example 10 of EP 1142936 A1 discloses a film having one of its layers composed of a bisphenol A polysulfone - poly(ethylene naphthalate) blend in a weight ratio of 10:90 as well as certain physical characteristics of the whole film (such as the surface roughness). The composition of example 10 exhibits poor mechanical properties (such as poor flexural strength), and does not solve the complex problem of the present invention, as above defined. The said complex problem is even not addressed at all by EP 1142936 A1.

EP 1215043 relates to polyester films made of a polyester resin and of a thermoplastic resin other than a polyester resin such as a polyimide resin, a polysulfone resin, and a poly(ether sulfone) resin, having superior quality, in particular, having significantly improved dimensional stability and surface properties compared to conventional polyester films. EP 1215043 does not disclose the specific combination of polysulfone with poly(ethylene naphthalate). Also, EP 1215043 does not address the complex problem as above defined.

US 3,742,087 (assigned to Imperial Chemical Industries Limited) discloses thermoplastic polymer blends containing from 99.9 to 1 percent of one or more poly(aryl ether sulfone)s with 0.1 to 99 percent of one or more thermoplastic polyesters. According to US 3,742,087, as it were, any poly(aryl ether sulfone) and any polyester would be suitable to be blended so as to provide blends with a satisfactory compromise between melt processability and mechanical properties, especially impact strength. Thus, per US 3,742,087, any polysulfone of the general formula Ar-SO₂ would be indifferently suitable. Similarly, per US 3,742,087, polyesters such as poly(ethylene sebacate)s, poly(ethylene terephthalate)s and poly(ethylene naphthalate)s would be indifferently suitable. US 3,742,087 keeps silent about any other benefit that might result from combining polysulfone with poly(ethylene naphthalate) and, among the numerous exemplified blends, none corresponds to this specific combination. In fact, US 3,742,085 does not address at all the complex problem as above defined.

It has been found surprisingly that the desired requirements for a composition of matter to be used notably in a contact lens packaging application, in particular providing a reduced rate of moisture vapor transmission, while featuring good mechanical properties (and in particular flexibility) and optical properties (and in particular transparency) and possibly still other additional requirements are met by a polymer composition (C) containing :
- a poly(aryl ether sulfone) (P) of which more than 50 mol. % of the recurring units are recurring units (R) containing at least one ether group (-O-), at least one sulfone group (-SO₂-), and at least two arylene groups (Ar) linked to each other via a secondary, ternary or quaternary carbon atom, and
- a semi-aromatic polyester (P*) of which more than 50 mol. % of the recurring units are recurring units (R*) containing at least one ester group [-C(=O)O-], at least one alkylene group, and at least one arylene group (Ar*) comprising at least two benzenic rings, each of them having at least 2 carbon atoms in common with at least one other benzenic ring of the same arylene group,
- optionally in addition, at least one poly(aryl ether sulfone) (P2) different from the poly(aryl ether sulfone) (P),
- optionally in addition, at least one semi-aromatic polyester (P2*) different from the semi-aromatic polyester (P*),
wherein :
- the weight of the semi-aromatic polyester (P*) over the weight of the poly(aryl ether sulfone) (P) [(P*)/(P) weight ratio] is comprised between 0.05 and 5,
- the weight of the poly(aryl ether sulfone) (P) over the combined weight of the poly(aryl ether sulfone) (P) and the poly(aryl ether sulfone) (P2) { (P)/[(P)+(P2)] weight ratio} ranges from 0.70 to 1, and
- the weight of the semi-aromatic polyester (P*) over the combined weight of the semi-aromatic polyester (P*) and the semi-aromatic polyester (P2*) {(P*)/[(P*)+(P2*)] weight ratio } ranges from 0.70 to 1.

The (P*)/(P) weight ratio is preferably above 0.10, more preferably above 0.20 and still more preferably above 0.30. Besides, it is preferably below 4, more preferably below 2 and still more preferably below 1.

The combined weight amount of poly(aryl ether sulfone) (P) and semi-aromatic polyester (P*) [(P)+(P*) weight amount] is advantageously more than 30 wt. %, preferably more than 50 wt. %, more preferably more than 60 wt. % and still more preferably more than 70 wt. %, based on the total weight of the polymer composition (C).

### The poly(aryl ether sulfone) (P)

As previously mentioned, polymer composition (C) according to the present invention contains a poly(aryl ether sulfone) (P) of which more than 50 mol. % of the recurring units are recurring units (R) containing at least one ether group (-O-), at least one sulfone group (-SO₂-), and at least two arylene groups (Ar) linked to each other via a secondary, ternary or quaternary carbon atom.

For the purpose of the invention, a secondary carbon atom is intended to denote a carbon atom bonded to two other carbon atoms with single bonds and to two hydrogen atoms.

For the purpose of the invention, a ternary carbon atom is intended to denote a carbon atom bonded to three other carbon atoms with single bonds ant to one hydrogen atom.

For the purpose of the invention, a quaternary carbon atom is intended to denote a carbon atom bonded to four other carbon atoms with single bonds.

The two arylene groups (Ar) are preferably linked to each other via a ternary or quaternary carbon atom ; more preferably, they are linked to each other via a quaternary atom.

The secondary, ternary or quaternary carbon atom comprised in the recurring units (R) is linked to two arylene groups (Ar) and is usually of the general formula : 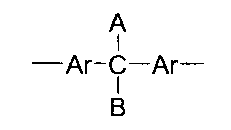 where A and B may be the same or different. They can notably be : hydrogen ; hydroxyl ; hydroxyalkyls ; hydroxyaralkyls ; alkoxys ; aralkyloxys ; amino ; aminoalkyls ; aminoaralkyls ; alkyl groups such as methyl, ethyl, butyl ; aralkyl groups such as a benzyl group ; halogenated alkyl groups, and in particular a trifluoromethyl group ; halogenoaralkyls ; alkyl and aralkyl groups substituted by carboxylic acid functions, ester functions, amido functions, aldehyde groups, ketone groups ; halogens, and in particular a fluorine atom.

A and B are preferably the same. They are preferably alkyl groups and still more preferably methyl groups.

Preferably at least 80 mol. %, and more preferably at least 95 mol. % of the recurring units of the poly(aryl ether sulfone) (P) are recurring units (R). Still more preferably, essentially all, if not all, the recurring units of the poly(aryl ether sulfone) (P) are recurring units (R).

The poly(aryl ether sulfone) (P) of the present invention may notably be a homopolymer, a random, alternating or block copolymer. It is preferably a homopolymer.

Recurring units (R) are preferably of at least one of the following formulae :
(i) 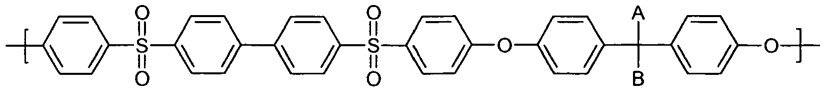
(ii)

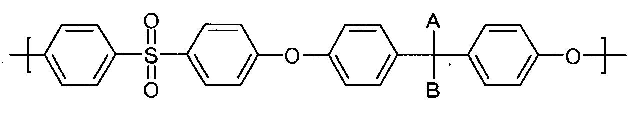

Formula (ii) is preferred over formula (i).

Recurring units (R) are more preferably of the following formula :

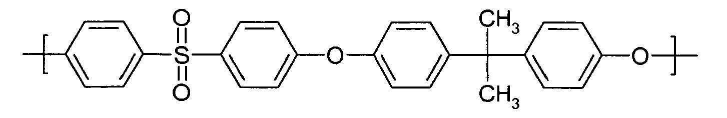

Such polysulfone (PSU) is commercially available as UDEL^{®} bisphenol A polysulfone from Solvay Advanced Polymers, L.L.C.

Recurring units (R) are generally formed by a polycondensation reaction. The polycondensation reaction is preferably one between at least one aromatic dihalo compound and at least one aromatic diol.

Non limitative examples of aromatic dihalocompounds include 4,4'-dihalodiphenyls, 4,4'-dihalodiphenylsulfones and dihalobenzenes such as o-, m- and p-dichlorobenzene, substituted dihalobenzenes such as 2,5-dichlorotoluene, 3,5-dichlorobenzoic acid, 2,5-dichlorobenzenesulfonic acid or 3,5-dichlorobenzenesulfonic acid and their salts. Dihalonaphthalenes such as 1,4-dibromonaphthalene or dihalodiphenyl ethers such as 4,4'-dichlorodiphenyl ether can, however, also be used. The most preferred dihalocompounds are the 4,4'-dihalodiphenylsulfones.

Any aromatic diol which is able to polymerize with the aromatic dihalocompound is suitable. Non limitative examples of such aromatic diols are 4,4'-biphenol (i.e. 4,4'-dihydroxybiphenyl), bisphenol A, 4,4'-dihydroxy-diphenylsulfone (also known as bisphenol S), hydroquinone, 2,2-bis(4-hydroxyphenyl)-perfluoropropane and 4,4'-dihydroxy-diphenylether. The most preferred aromatic diol is bisphenol A.

Poly(aryl ether sulfone) (P) is contained in polymer composition (C) in an amount of advantageously more than 10 wt. %, preferably more than 20 wt. %, more preferably more than 30 wt. %, still more preferably more than 40 wt. %, and the most preferably more than 50 wt. %, based on the total weight of the polymer composition (C). Besides, poly(aryl ether sulfone) (P) is contained in polymer composition (C) in an amount of advantageously less than 95 wt. %, preferably less than 90 wt. %, more preferably less than 85 wt. %, still more preferably less than 80 wt. %, and the most preferably less than 75 wt. %, based on the total weight of the polymer composition (C).

### The semi-aromatic polyester (P*)

As previously mentioned, polymer composition (C) contains a semi-aromatic polyester (P*) of which more than 50 mol. % of the recurring units contain at least one ester group [-C(=O)O-], at least one alkylene group, and at least one arylene group (Ar*) comprising at least two benzenic rings, each of them having at least 2 carbon atoms in common with at least one other benzenic ring of the same arylene group (the benzenic rings are fused) ; said recurring units containing at least one ester group, at least one alkylene group, and at least one arylene group (Ar*) as above defined, are hereinafter referenced as recurring units (R*).

Generally, semi-aromatic polyester (P*) is contained in polymer composition (C) in an amount of more than 5 wt. % ; this amount exceeds advantageously 10 wt. %, or even 15 wt. %, based on the total weight of the polymer composition (C). Semi-aromatic polyester (P*) is contained in polymer composition (C) in an amount of preferably more than 20 wt. %, and more preferably more than 25 wt. %, based on the total weight of the polymer composition (C). Besides, semi-aromatic polyester (P*) is contained in polymer composition (C) in an amount of advantageously less than 80 wt. %, preferably less than 60 wt. %, more preferably less than 45 wt. %, and still more preferably less than 35 wt. %, based on the total weight of the polymer composition (C).

As non limitative examples of arylene groups (Ar*) with fused benzenic rings, it can be cited naphthylenes (such as 2,6-naphthylene), anthrylenes (such as 2,6-anthrylene) and phenanthrylenes (such as 2,7-phenanthrylene), naphthacenylenes and pyrenylenes groups.

Preferred recurring units (R*) consist of one or two ester group(s), one C₂₋C₈ alkylene group, and one arylene group (Ar*), wherein the ester group(s) is (are) directly joined to arylene group (Ar*) by one single bond ; said preferred recurring units (R*) are :
(j) 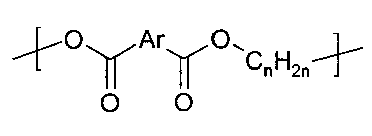 or
(jj) 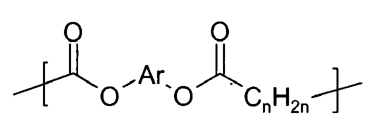 or
(jjj) 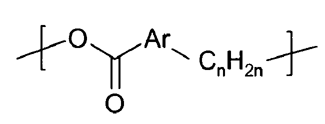
or mixtures thereof,
wherein :
- recurring units (j) and (jj) are preferred over recurring units (jjj), and recurring units (j) are preferred over recurring units (jj) ;
- CₙH₂ₙ is the C₂-C₈ alkylene group, preferably a linear C₂-C₈ alkylene group, more preferably a linear C₂, C₃ or C₄ alkylene group, and
- Ar is arylene group (Ar*), preferably a naphthylene group, and still more preferably a 2,6-naphthylene group, namely :

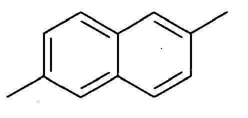

Recurring units (R*) are still more preferably :
(k) 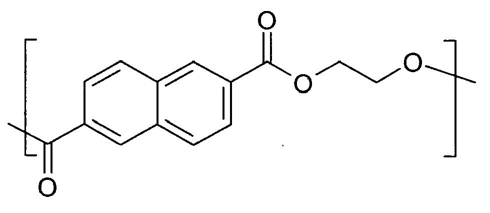 or
(kk) 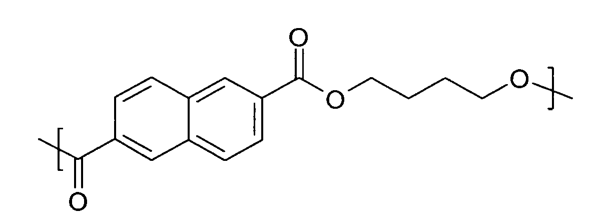 or (kkk) a mixture consisting of (k) and (kk).

The most preferable recurring units (R*) are :

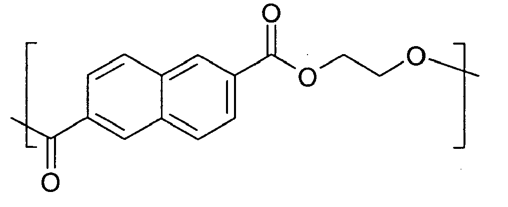

The corresponding semi-aromatic polyesters are commonly referred to as poly(ethylene naphthalate)s.

Semi-aromatic polyester (P*) may notably be a homopolymer, a random, alternating or block copolymer. It is preferably a homopolymer.

Preferably at least 70 mol. %, and more preferably at least 85 mol. % of the recurring units of semi-aromatic polyester (P*) are recurring units (R*). Still more preferably, essentially all, if not all, the recurring units of semi-aromatic polyester (P*) are recurring units (R*). Excellent results were obtained with homopolymers the recurring units of which are :

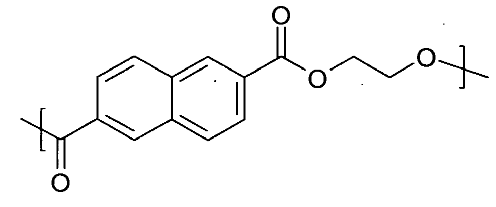

TEONEX^{®} poly(ethylene naphthalate) from Teijin Chemicals is an example of the above homopolymer.

### The compatibilizing agent

Polymer composition (C) may be free of any compatibilizing agent. Alternatively, polymer composition (C) may further contain at least one compatibilizing agent (A).

The general principle of compatibilization is to reduce interfacial energy between two polymers in order to increase adhesion and miscibility. Generally, adding a compatibilizing agent also results in finer dispersion, as well as more regular and stable morphologies of the blends.

For the purpose of the invention, a compatibilizing agent is intended to denote an agent that allows two or more substances to mix together without separating. Examples of compatibilizing agents include plasticizers and block copolymers.

The compatibilizing agent (A) may be a polymer different from a poly(aryl ether sulfone) and from a semi-aromatic polyester.

The compatibilizing agent (A) is preferably selected from the group consisting of polycarbonates, polyarylates and polyetherimides. The compatibilizing agent (A) is preferably a polycarbonate.

For the purpose of the present invention, a polycarbonate is intended to denote any polymer of which more than 50 mol. % of the recurring units (and preferably, essentially all - if not, all - the recurring units) are recurring units (R1) comprising at least one optionally substituted arylene group and at least one carbonate group (-O-C(=O)-O-). The polycarbonate may be a homopolymer or a copolymer, such as a polycarbonate-poly(ethylene terephthalate) copolymer.

Polyarylates, also called wholly aromatic polyesters, are well known to the skilled in the art. More than 50 mol. % of the recurring units (and preferably, essentially all - if not, all - the recurring units) of the polyarylates are recurring units (R2) consisting of at least one ester group [-C(=O)O-] and at least one arylene group ; very often, the arylene group is unsubstituted ; it can however be substituted by a monovalent radical. Polyarylates are generally obtained by the polymerization of an aromatic diacid and an aromatic diol, and/or an aromatic monacid-monalcohol (such as p-hydroxybenzoic acid).

For the purpose of the present invention, a polyetherimide is intended to denote any polymer of which more than 50 mol. % of the recurring units (and preferably, essentially all - if not, all - the recurring units) are recurring units (R3) : 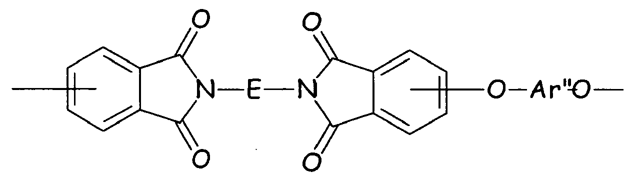 as such, and/or in their amic acid forms 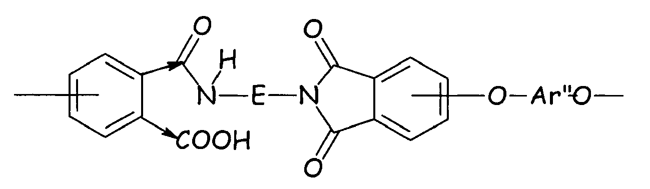 and/or 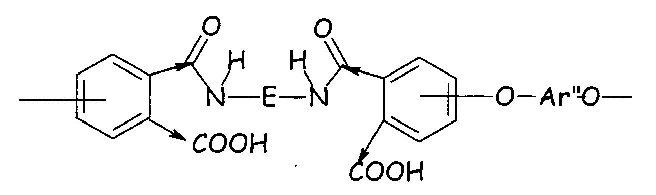 wherein :
- the → denotes isomerism so that in any recurring unit the groups to which the arrows point may exist as shown or in an interchanged position ;
- E is typically : 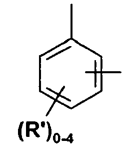 with the R' being, independently from each other, alkyl radicals comprising from 1 to 6 carbon atoms, aryls or halogens ; 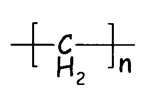 with n = integer from 1 to 6 ; 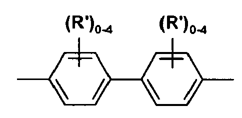 with the R' being, independently from each other, alkyl radicals comprising from 1 to 6 carbon atoms, aryls or halogens ; 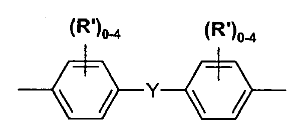 with the R' being, independently from each other, alkyl radicals comprising from 1 to 6 carbon atoms, aryls or halogens ; and Y being chosen from :
   alkylenes of 1 to 6 carbon atoms, in particular 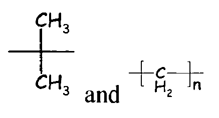 with n = integer from 1 to 6, perfluoroalkylenes of 1 to 6 carbon atoms, in particular 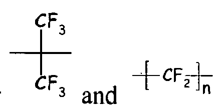 with n = integer from 1 to 6, cycloalkylenes of 4 to 8 carbon atoms ; alkylidenes of 1 to 6 carbon atoms ; cycloalkylidenes of 4 to 8 carbon atoms ; 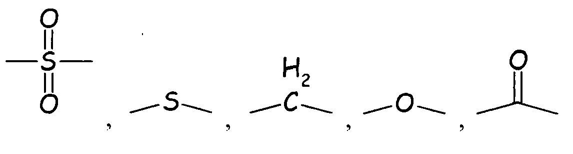
Ar" is typically :

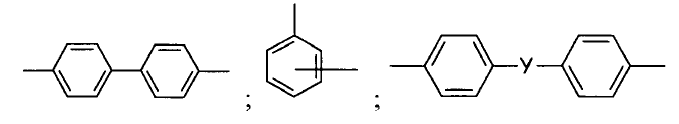

The compatibilizing agent (A), if present in the polymer composition (C), is contained in an amount of advantageously more than 0.1 wt. %, preferably more than 0.5 wt. %, and more preferably more than 1.0 wt. %, based on the total weight of the polymer composition (C). Besides, compatibilizing agent (A) is contained in polymer composition (C) in an amount of advantageously less than 20 wt. %, preferably less than 10 wt. %, more preferably less than 5 wt. %, and still more preferably less than 2 wt. %, based on the total weight of the polymer composition (C).

In a particular embodiment of the present invention, the polymer composition (C) comprises at least one compatibilizing agent (A) and at least one poly(aryl ether sulfone) (P2), wherein :
- the compatibilizing agent (A) and the poly(aryl ether sulfone) (P2) are compatible with each other,
- the compatibilizing agent (A) is compatible with the semi-aromatic polyester (P*), and
- the poly(aryl ether sulfone) (P2) is compatible with the poly(aryl ether sulfone) (P).

In another particular embodiment of the present invention, to which the preference is often given, the polymer composition (C) comprises at least one compatibilizing agent (A) and at least one semi-aromatic polyester (P2*), wherein :
- the compatibilizing agent (A) and the semi-aromatic polyester (P2*) are compatible with each other,
- the compatibilizing agent (A) is compatible with the poly(aryl ether sulfone) (P), and
- the semi-aromatic polyester (P2*) is compatible with the semi-aromatic polyester (P*).

In this embodiment, it is preferred that the compatibilizing agent (A) is a polycarbonate and the semi-aromatic polyester (P2*) is a poly(ethylene terephthalate).

Still in this embodiment, the weight of the semi-aromatic polyester (P2*), based on the combined weight of the semi-aromatic polyester (P2*) and the compatibilizing agent (A), is advantageously more than 30 %, preferably more than 50 % and more preferably more than 70 % ; besides, the weight of the semi-aromatic polyester (P2*), based on the combined weight of the semi-aromatic polyester (P2*) and the compatibilizing agent (A), is advantageously less than 95 %, preferably less than 90 % and more preferably less than 85 %.

Still in this embodiment, the weight of the semi-aromatic polyester (P2*), based on the total weight of the polymer composition (C), is advantageously more than 1.0 %, preferably more than 2.0 % and more preferably more than 3.0 % ; besides, the weight of the semi-aromatic polyester (P2*), based on the total weight of the polymer composition (C), is advantageously less than 40 %, preferably less than 20 %, more preferably less than 10 % and still more preferably less than 5 %.

### The poly(aryl ether sulfone) (P2).

The polymer composition (C) may be free of any poly(aryl ether sulfone) (P2) different from the poly(aryl ether sulfone) (P).

Alternatively, the polymer composition (C) may further comprise a poly(aryl ether sulfone) (P2) different from the poly(aryl ether sulfone) (P), in a weight amount such that the weight of the poly(aryl ether sulfone) (P) over the combined weight of the poly(aryl ether sulfone) (P) and the poly(aryl ether sulfone) (P2){(P)/[(P)+(P2)] weight ratio} is of at least 0.70.

Poly(aryl ether sulfone)s are well known to the skilled person. In principle, any poly(aryl ether sulfone) other than the poly(aryl ether sulfone) (P) can be used as the poly(aryl ether sulfone) (P2). In general, more than 50 mol. % of the recurring units of the poly(aryl ether sulfone) (P2) contain at least one ether group (-O-), at least one sulfone group (-SO₂-), and at least two arylene groups linked to each other otherwise than via a secondary, ternary or quaternary carbon atom.

Poly(aryl ether sulfone) (P2) may be notably a polyethersulfone, a polyetherethersulfone, or a polyphenylsulfone.

Polyetherethersulfones, as herein defined, are polycondensation polymers of which more than 50 mol. % of the recurring units are :

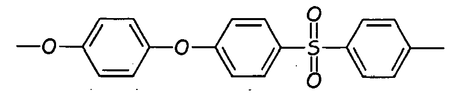

Polyethersulfones, as herein defined, are polycondensation polymers of which more than 50 mol. % of the recurring units are : 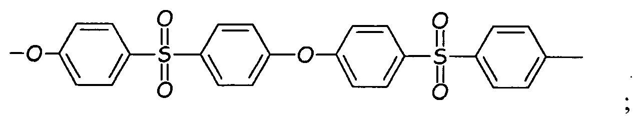 said polyethersulfones may optionally further comprise notably less than 50 mol. % of recurring units

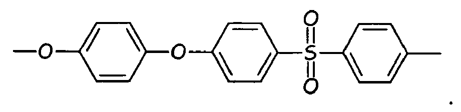

Polyethersulfones are commercially available as RADEL^{®} A from Solvay Advanced Polymers, L.L.C.

Polyphenylsulfones, as herein defined, are polycondensation polymers of which more than 50 mol. % of the recurring units are :

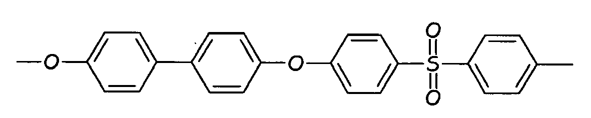

Polyphenylsulfones are commercially available as RADEL^{®} R from Solvay Advanced Polymers, L.L.C.

Poly(aryl ether sulfone) (P2) may notably be a homopolymer, a random, alternating or block copolymer.

The weight of the poly(aryl ether sulfone) (P) over the combined weight of the poly(aryl ether sulfone) (P) and the poly(aryl ether sulfone) (P2) { (P)/[(P)+(P2)] weight ratio } is preferably of at least 0.80, more preferably at least 0.90, and still more preferably at least 0.95 or even at least 0.99. Most preferably, it is equal to 1, i.e. the polymer composition (C) is then free of any poly(aryl ether sulfone) (P2) different from the poly(aryl ether sulfone) (P).

### The semi-aromatic polyester (P2*).

The polymer composition (C) may be free of any semi-aromatic polyester (P2*) different from the semi-aromatic polyester (P*).

Alternatively, the polymer composition (C) may further comprise a semi-aromatic polyester (P2*) different from the semi-aromatic polyester (P*), in a weight amount such that the weight of the semi-aromatic polyester (P*) over the combined weight of the semi-aromatic polyester (P*) and the semi-aromatic polyester (P2*) {(P*)/[(P*)+(P2*)] weight ratio} is of at least 0.70.

Semi-aromatic polyesters are well known to the skilled person. In principle, any semi-aromatic polyester other than the semi-aromatic polyester (P*) can be used as the semi-aromatic polyester (P2*). In general, more than 50 mol. % of the recurring units of the semi-aromatic polyester (P2*) contain at least one ester group [-C(=O)O-], at least one alkylene group, and at least one arylene group different from the arylene group (Ar*) as previously defined.

Semi-aromatic polyester (P2*) is preferably a polymer of which more than 50 mol. % of the recurring units are chosen from
(m) 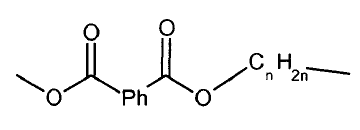
(mm) 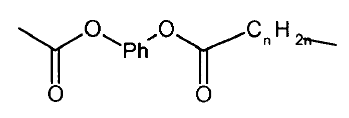
(mmm) 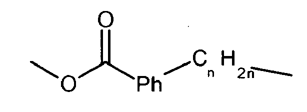
and mixtures thereof,
wherein :
- recurring units (m) and (mm) are preferred over recurring units (mmm), and recurring units (m) are preferred over recurring units (mm) ;
- CₙH₂ₙ is a C₂-C₈ alkylene group, preferably a linear C₂-C₈ alkylene group, more preferably a linear C₂, C₃ or C₄ alkylene group, and
- Ph is phenylene group, preferably a p-phenylene group.

Semi-aromatic polyester (P2*) is more preferably chosen from poly(ethylene terephthalate)s and poly(butylene terephthalate)s.

Poly(ethylene eterephthalate)s, as herein defined, are polymers of which more than 50 mol. % of the recurring units are :

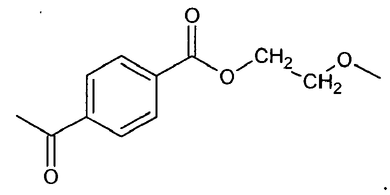

Poly(butylene terephthalate)s, as herein defined, are polymers of which more than 50 mol. % of the recurring units are :

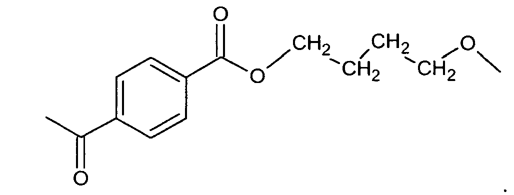

Semi-aromatic polyester (P2*) is still more preferably chosen from poly(ethylene eterephthalate)s, preferably from poly(ethylene eterephthalate)s homopolymers and poly(ethylene eterephthalate)s copolymers the recurring units of which consist of, on one hand : 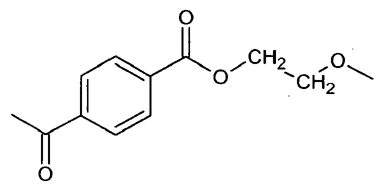 and, on the other hand, either 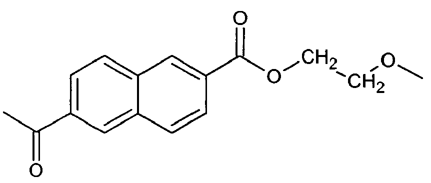 or 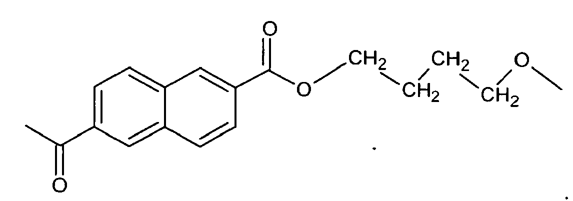 or a mixture of the above two recurring units.

Semi-aromatic polyester (P2*) may notably be a homopolymer, a random, alternating or block copolymer, such as a random, alternating or block poly(ethylene terephthalate)-polycarbonate copolymer.

The weight of the semi-aromatic polyester (P*) over the combined weight of the semi-aromatic polyester (P*) and the semi-aromatic polyester (P2*) { (P*)/[(P*)+(P2*)] weight ratio } is preferably of at least 0.75 and more preferably above 0.80. In certain cases, it may be most preferred that the (P*)/[(P*)+(P2*)] weight ratio ranged between 0.80 and 1, for example between 0.85 and 0.95 ; in certain other cases, it may be most preferred that the (P*)/[(P*)+(P2*)] weight ratio be equal to 1, i.e. the polymer composition (C) is then free of any semi-aromatic polyester (P2*) different from the semi-aromatic polyester (P*).

### Other optional ingredients

Polymer composition (C) may further comprise other ingredients suitable for being used in poly(aryl ether sulfone) compositions and/or semi-aromatic polyester compositions, notably thermal stabilizers ; ultraviolet light stabilizers ; plasticizers ; inorganic flame retardants like zinc borate ; inorganic heat stabilizers like zinc oxide ; pigments like titanium dioxide and carbon black ; reinforcing fibrous fillers like glass fiber, graphite fiber, silicon carbide fiber ; reinforcing particulate fillers like particles consisting of a metal or of a metal alloy, mineral fillers, wollastonite ; nucleating agents such as talc and mica ; mold release agents like flurorocarbon polymers.

It is sometimes preferred that polymer composition (C) be essentially composed of, or even be composed of, the poly(aryl ether sulfone) (P), the semi-aromatic polyester (P*) and, optionally in addition, one or more of the poly(aryl ether sulfone) (P2), the semi-aromatic polyester (P*2) and the compatibilizing agent (A).

It is also sometimes preferred that polymer composition (C) be essentially composed of, or even be composed of, the poly(aryl ether sulfone) (P), the semi-aromatic polyester (P*) and, optionally in addition, the compatibilizing agent (A).

Polymer composition (C) is advantageously prepared by any conventional mixing method. A preferred method comprises dry mixing the ingredients of polymer composition (C) in powder or granular form, using e.g. a mechanical blender, then extruding the mixture into strands and chopping the strands into pellets.

Polymer composition (C) may be useful in medical devices and packaging applications.

Another aspect of the present invention is directed to high-performance shaped articles, with all the above described advantages of the polymer composition (C).

With this end in view, the present invention concerns a shaped article (S) comprising the polymer composition (C) as above described.

Shaped article (S) proved to be superior with regard to prior art similar shaped articles, especially when contacted to aqueous solutions comprising chemical compounds such as the contact lenses cleaning agents as above described.

Shaped article (S) can be a contact lens case. Other articles including usefully the polymer composition (C) include but are not limited to vials, tubes, catheters, blisters, syringes, part of suction or dialysis systems, food and medical packages.

Shaped article (S) can be notably temporarily or permanently under stress.

Shaped article (S) can be notably temporarily or permanently in contact with water and/or with a chemical aggressive environment, in particular with chemical compounds such as the contact lenses cleaning agents as above described.

Finally, a last aspect of the present invention is directed to the use of a semi-aromatic polyester (P*) to reduce the moisture vapour transmission rate (MVTR) of a poly(aryl ether sulfone) (P) comprised in a polymer composition (C),
more than 50 mol. % of the recurring units of said semi-aromatic polyester (P*) being recurring units (R*) containing at least one ester group [-C(=O)O-], at least one alkylene group, and at least one arylene group (Ar*) comprising at least two benzenic rings, each of them having at least 2 carbon atoms in common with at least one other benzenic ring of the same arylene group, and more than 50 mol. % of the recurring units of said poly(aryl ether sulfone) (P) being recurring units (R) containing at least one ether group (-O-), at least one sulfone group (-SO₂-), and at least two arylene groups (Ar) linked to each other via a secondary, ternary or quaternary carbon atom, wherein the weight ratio (P^{t})/(P) is above 0.2 and below 1.

A closely related aspect of the present invention is directed to a method for reducing the moisture vapor transmission rate (MVTR) of a poly(aryl ether sulfone) (P) in the need thereof,
more than 50 mol. % of the recurring units of said poly(aryl ether sulfone) (P) being recurring units (R) containing at least one ether group (-O-), at least one sulfone group (-SO₂-), and at least two arylene groups (Ar) linked to each other via a secondary, ternary or quaternary carbon atom,
said method comprising mixing the poly(aryl ether sulfone) (P) with a semi-aromatic polyester (P*) of which more than 50 mol. % of the recurring units are recurring units (R*) containing at least one ester group [-C(=O)O-], at least one alkylene group, and at least one arylene group (Ar*) comprising at least two benzenic rings, each of them having at least 2 carbon atoms in common with at least one other benzenic ring of the same arylene group,
so as to form a polymer composition (C) comprising the poly(aryl ether sulfone) (P) and the semi-aromatic polyester (P*).

The MVTR of the polymer composition (C), measured according to method ASTM F-1249 on a 0.0625 inches plate, is advantageously below 3.10⁻² g/(100 in².24 hours), preferably below 25.10⁻³ g/(100 in².24 hours), more preferably below 20.10⁻³ g/(100 in².24 hours), still more preferably below 18.10⁻³ g/(100 in².24 hours), and the most preferably below 16.10⁻³ g/(100 in².24 hours).

The haze of the polymer composition (C), measured according to method ASTM D-1003 on a 0.0625 inches plate, is advantageously below 40 %, preferably below 30 %, more preferably below 25 %, still more preferably below 20 % and the most preferably below 17 %.

In general, the lowest MVTR and haze values can be achieved when
the polymer composition (C) comprises at least one compatibilizing agent (A) and at least one semi-aromatic polyester (P2*), said compatibilizing agent (A) and said semi-aromatic polyester (P2*) being compatible with each other, said compatibilizing agent (A) being compatible with the poly(aryl ether sulfone) (P), and said semi-aromatic polyester (P2*) being compatible with the semi-aromatic polyester (P*).

(P*)/(P) weight ratio is generally comprised between 0.05 and 5.

(P*)/(P) weight ratio is preferably above 0.10 and more preferably above 0.20. Besides, it is preferably below 4, more preferably below 2 and still more preferably below 1.

Semi-aromatic polyester (P*) and poly(aryl ether sulfone) (P) involved in the presently invented use comply with all the characteristics of semi-aromatic polyester (P*) and poly(aryl ether sulfone) (P) contained in the invented polymer composition [polymer composition (C)], at any level of preference.

Semi-aromatic polyester (P*) is usually blended with poly(aryl ether sulfone) (P) and possibly other optional ingredients, so as to form a polymer composition, the content of which is identical, as to the nature of its ingredients and their amounts, to the content of the invented polymer composition [polymer composition (C)].

Provided below are examples illustrative of the present invention, but not limitative thereof.

### EXAMPLES

Two polymer compositions were prepared according to the present invention, namely polymer compositions E1 and E2. Seven polymer compositions to the contrary of the invention, namely polymer composition CE1, CE2, CE3, CE4, CE5, CE6 and CE7 were also prepared for comparison. The nature and amount of all the ingredients contained in the exemplified polymer compositions are listed in table 1.

The bisphenol A polysulfone (PSU) and poly(ether sulfone) (PES) used in these experiments were respectively Udel^{®} P-3703 NT 11 and Radel^{®} A-300 NT supplied by Solvay Advanced Polymers, L.L.C. ; poly(ethylene naphthalate) (PEN) was TEONEX^{®} TN8065S, purchased from Teijin Chemicals Ltd. ; poly(ethylene terephthalate) (PET) Eastar EN052 Natural grade were purchased from Eastman Chemical Company and the polycarbonate (PC) Makrolon^{®} 3108-550115 grade was purchased from Bayer.

**Table 1 : Formulations**

| | **E1** | **E2** | **CE1** | **CE2** | **CE3** | **CE4** | **CE5** | **CE6** | **CE7** |
|---|---|---|---|---|---|---|---|---|---|
| PSU | 70 | 66.6 | 100 | - | - | - | - | 70 | - |
| PEN | 30 | 28.6 | - | 100 | 30 | 40 | - | - | - |
| PES | - | - | - | - | 65 | 55 | 100 | - | - |
| PC | | 1.1 | | | 1.2 | 1.2 | | 7 | |
| PET | - | 3.7 | - | - | 3.8 | 3.8 | - | 23 | 100 |

### Preparation of specimens

All polymer compositions were prepared in the same way. The ingredients were pre-blended and dried in a desiccated circulating oven at 150°C for 16 hours prior to compounding, notably to prevent hydrolytic degradation of the poly(ethylene naphthalate) ingredient. The so-obtained pre-blends were extruded on a Berstorff 25 mm co-rotating intermeshing twin screw extruder, with a die, a screw and 8 barrels, under the conditions listed in table 2 hereafter.

**Table 2 : Extrusion conditions**

| Temperature of barrel 1 (=throat) (°C) | no heating |
|---|---|
| Temperature of barrel 2 (°C) | 250 |
| Temperature of barrel 3 (°C) | 300 |
| Temperature of barrel 4 (°C) | 280 |
| Temperature of barrel 5 (°C) | 300 |
| Temperature of barrel 6 (°C) | 300 |
| Temperature of barrel 7 (°C) | 300 |
| Temperature of barrel 8 (°C) | 300 |
| Temperature of the die (°C) | 270 |
| Temperature of the melt (°C) | 310 |
| Vacuum level at barrel 7 (in Hg) | 30 |
| Screw speed (rpm) | 190 |
| Throughput rate (1b/hr) | 20 |

The extrudates were pelletized, and the so-obtained pellets were dried again and injection molded on a 50 ton Sumitomo injection molding machine, using the conditions of table 3, so as to obtain test specimens notably 3.2 mm ASTM Type I tensile and flexural specimens for measuring the mechanical properties and 4x4x1/16" plaques were injection molded for evaluation of MVTR.

**Table 3 : Injection molding conditions**

| | |
|---|---|
| Rear barrel zone temperature (°F) | 543 |
| Mid barrel zone temperature (°F) | 550 |
| Front barrel zone temperature (°F) | 550 |
| Nozzle temperature (°F) | 540 |
| Mold temperature (°F) | 225 |
| Injection pressure (psi) | 1072 |
| Holding pressure (psi) | 150 |
| Screw speed (rpm) | 220 |
| Cooling Time (s) | 30 |
| Cycle Time (s) | 32 |

### Testing of the specimens :

Mechanical Properties : Tensile testing was carried out in accordance with ASTM D-638, Flexural Measurements using ASTM D-790 procedure and Izod impact testing in accordance with ASTM D256.
Transparency and haze measurements : Light Transmission and haze measurements were made according to the ASTM D-1003 procedure. The samples were 0.0625 inches or 1.588mm for E1, E2, CE2, CE3, CE4, CE6 and 0.125 inches or 3.175mm plates for CE1 and CE5.
Evaluation of the MVTR : The moisture vapor transmission rate measurements were made with a MOCON Permatran - W 3/33 Water Vapor Permeability Instrument according to method ASTM F-1249. The measurements were made at 23°C and 40 % relative humidity with nitrogen as the carrier gas.

### Results

The results are presented in table 4.

**Table 4 : Results**

| | **E1** | **E2** | **CE1** | **CE2** | **CE3** | **CE4** | **CE5** | **CE6** | **CE7** |
|---|---|---|---|---|---|---|---|---|---|
| MVTR (g/100 in². 24 hours).10⁻² | 1.48 | 1.46 | 5.01 | 0.26 | 0.95 | 0.61 | - | 2.1 | - |
| Light transmittance (%) | 69.7 | 81.6 | 81.2 | 86.9 | 57.4 | 58.9 | 70 | 17.4 | - |
| Haze (%) | 37.2 | 15.0 | 6.8 | 2.1 | 74.8 | 67.7 | 0.83 | 96.6 | - |
| Flexural strength (ksi) | 15.7 | 15.2 | 15.4 | 14.1 | 16.4 | 16.1 | 16.1 | 16.1 | 11.7 |

In a surprising way, many of the mechanical properties of E1 and E2 polysulfone-poly(ethylene naphthalate) blends (according to the invention) were measured at a very high level, equal to or even sometimes improved with regard to polysulfone taken alone (CE1), especially their flexural strength. The invented blends (E1 and E2) achieve to maintain the flexural strength at high levels, even higher than for the polysulfone taken alone (CE1).

The data suggest that while achieving globally a good level of mechanical properties, the invented blends exhibit surprisingly reduced MVTR, in comparison with the result obtained with the polysulfone taken alone (CE1). For instance, the addition of only 30 wt. % of PEN to PSU make the MVTR value drop to a level of about 50 % of what was expected.

Surprisingly, the PEN-PSU blends were transparent. It is known in the art that mixing two or more transparent polymers do not give transparent blends. In the present case, both PSU and PEN (respectively CE1 and CE2) feature high light transmittance and low haze. Comparative examples CE3 and CE4 illustrate interestingly this fact. Even if PES and PEN feature high light transmittance and low haze, the blends of these two polymers do not give satisfactory results in terms of optical properties.

Thus, while achieving globally a good level of mechanical properties and an improved MVTR, the invented blends exhibit also unexpectedly high light transmittance and low haze.

The presence of the compatibilizing agent according to the present invention, such as a blend of PET/PC (see E2), reduced the haze of the samples.

On the other hand blending PSU with another polyester of a similar structure to that of PEN, such as PET (CE6) did not gave good results in terms of light transmittance and haze measurements, even in the presence of a polycarbonate compatibilizing agent.

Obviously, numerous modifications and variations of the present invention are possible in light of the above teachings. It is therefore to be understood that within the scope of the appended claims, the invention may be practiced otherwise than as specifically described herein.

## Claims

1. Polymer composition (C) containing :
- a poly(aryl ether sulfone) (P) of which more than 50 mol. % of the recurring units are recurring units (R) containing at least one ether group (-O-), at least one sulfone group (-SO₂-), and at least two arylene groups (Ar) linked to each other via a secondary, ternary or quaternary carbon atom, and
- a semi-aromatic polyester (P*) of which more than 50 mol. % of the recurring units are recurring units (R*) containing at least one ester group [-C(=O)O-], at least one alkylene group, and at least one arylene group (Ar*) comprising at least two benzenic rings, each of them having at least 2 carbon atoms in common with at least one other benzenic ring of the same arylene group,
- optionally in addition, at least one poly(aryl ether sulfone) (P2) different from the poly(aryl ether sulfone) (P),
- optionally in addition, at least one semi-aromatic polyester (P2*) different from the semi-aromatic polyester (P*),
wherein :
- the weight of the semi-aromatic polyester (P*) over the weight of the poly(aryl ether sulfone) (P) [(P*)/(P) weight ratio] is comprised between 0.05 and 5,
- the weight of the poly(aryl ether sulfone) (P) over the combined weight of the poly(aryl ether sulfone) (P) and the poly(aryl ether sulfone) (P2) { (P)/[(P)+(P2)] weight ratio } ranges from 0.70 to 1, and
- the weight of the semi-aromatic polyester (P*) over the combined weight of the semi-aromatic polyester (P*) and the semi-aromatic polyester (P2*) { (P*)/[(P*)+(P2*)] weight ratio } ranges from 0.70 to 1.

2. Polymer composition according to claim 1, **characterized in that** it further contains a compatibilizing agent (A) selected from the group consisting of polycarbonates, polyarylates and polyetherimides.

3. Polymer composition according to claim 1 or 2, **characterized in that** the polymer composition (C) comprises at least one compatibilizing agent (A) and at least one semi-aromatic polyester (P2*), wherein :
- the compatibilizing agent (A) and the semi-aromatic polyester (P2*) are compatible with each other,
- the compatibilizing agent (A) is compatible with the poly(aryl ether sulfone) (P), and
- the semi-aromatic polyester (P2*) is compatible with the semi-aromatic polyester (P*).

4. Polymer composition according to claim 3, **characterized in that** the compatibilizing agent (A) is a polycarbonate and the semi-aromatic polyester (P2*) is a poly(ethylene terephthalate).

5. Polymer composition according to any one of the preceding claims, **characterized in that** the (P*)/(P) weight ratio is between 0.10 and 2.

6. Polymer composition according to any one of the preceding claims, **characterized in that** the (P*)/(P) weight ratio is between 0.30 and 1.

7. Polymer composition according to any one of the preceding claims, **characterized in that** essentially all the recurring units of the poly(aryl ether sulfone) (P) are recurring units (R) of formula : 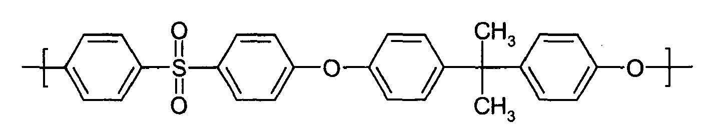 and essentially all the recurring units of the semi-aromatic polyester (P*) are recurring units (R*) of formula :

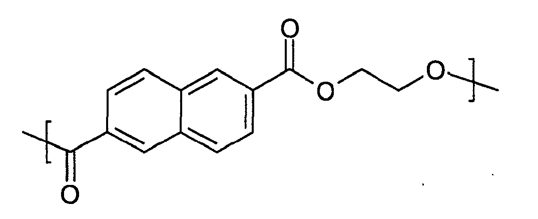

8. Polymer composition according to any one of the preceding claims, **characterized in that** the poly(aryl ether sulfone) (P) is contained in the polymer composition (C) in an amount between 30 wt. % and 85 wt. %, based on the total weight of the polymer composition (C), and the semi-aromatic polyester (P*) is contained in the polymer composition (C) in an amount of between 15 wt. % and 60 wt. %, based on the total weight of the polymer composition (C).

9. Shaped article (S) comprising the polymer composition (C) according to any one of the preceding claims.

10. Shaped article according to claim 9, **characterized in that** it is a contact lens.

11. Use of a semi-aromatic polyester (P*) to reduce the moisture vapour transmission rate (MVTR) of a poly(aryl ether sulfone) (P) comprised in a polymer composition (C),
more than 50 mol. % of the recurring units of said semi-aromatic polyester (P*) being recurring units (R*) containing at least one ester group [-C(=O)O-], at least one alkylene group, and at least one arylene group (Ar*) comprising at least two benzenic rings, each of them having at least 2 carbon atoms in common with at least one other benzenic ring of the same arylene group, and
more than 50 mol. % of the recurring units of said poly(aryl ether sulfone) (P) being recurring units (R) containing at least one ether group (-O-), at least one sulfone group (-SO₂-), and at least two arylene groups (Ar) linked to each other via a secondary, ternary or quaternary carbon atom,
wherein the semi-aromatic polyester (P*) over poly(aryl ether sulfone) (P) weight ratio [(P*)/(P) weight ratio] is above 0.20 and below 1.

12. Use according to claim 11, **characterized in that** the MVTR of the polymer composition (C), measured according to method ASTM F-1249 on a 0.0625 inches plate, is below 3.10⁻² g/(100 in².24 hours) and the haze of the polymer composition (C), measured according to the ASTM D-1003 on a 0.0625 inches plate, is below 40 %.

13. Use according to claim 11 or 12, **characterized in that** :
- essentially all the recurring units of the semi-aromatic polyester (P*) are recurring units (R*) of the formula : 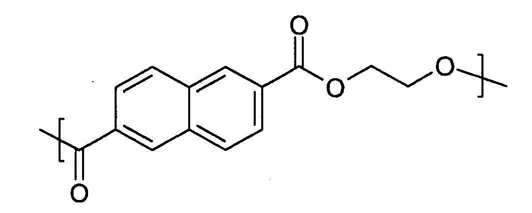
- essentially all the recurring units of the poly(aryl ether sulfone) (P) are recurring units (R) of the formula :

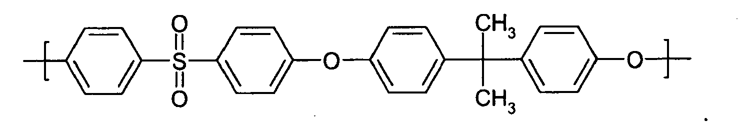

14. Use according to any one of claims 11 to 13, **characterized in that** the polymer composition (C) comprises at least one compatibilizing agent (A) and at least one semi-aromatic polyester (P2*), said compatibilizing agent (A) and said semi-aromatic polyester (P2*) being compatible with each other, said compatibilizing agent (A) being compatible with the poly(aryl ether sulfone) (P), and said semi-aromatic polyester (P2*) being compatible with the semi-aromatic polyester (P*).

15. Use according to claim 14, **characterized in that** the haze of the polymer composition (C), measured according to the ASTM D-1003 on a 0.0625 inches plate, is below 20 %.

## Patentansprüche

1. Polymerzusammensetzung (C), enthaltend :
- ein Poly(arylethersulfon) (P), wobei es sich bei mehr als 50 Mol- % der Wiederholungseinheiten um Wiederholungseinheiten (R) mit mindestens einer Ethergruppe (-O-), mindestens einer Sulfongruppe (-SO₂-) und mindestens zwei Arylengruppen (Ar), die miteinander über ein sekundäres, ternäres oder quaternäres Kohlenstoffatom verbunden sind, handelt, und
- einen teilaromatischen Polyester (P*), wobei es sich bei mehr als 50 Mol- % der Wiederholungseinheiten um Wiederholungseinheiten (R*) mit mindestens einer Estergruppe [-C(=O)O-], mindestens einer Alkylengruppe und mindestens einer Arylengruppe (Ar*), die mindestens zwei Benzolringe umfaßt, die jeweils mindestens 2 Kohlenstoffatome mit mindestens einem anderen Benzolring derselben Arylengruppe gemeinsam haben, handelt,
- gegebenenfalls zusätzlich mindestens ein Poly(arylethersulfon) (P2), das von dem Poly(arylethersulfon) (P) verschieden ist,
- gegebenenfalls zusätzlich mindestens einen teilaromatischen Polyester (P2*), der von dem teilaromatischen Polyester (P*) verschieden ist,
worin :
- das Gewicht des teilaromatischen Polyesters (P*) gegenüber dem Gewicht des Poly(arylethersulfons) (P) [Gewichtsverhältnis (P*)/(P)] zwischen 0,05 und 5 liegt,
- das Gewicht des Poly(arylethersulfons)(P) gegenüber dem kombinierten Gewicht des Poly(arylethersulfons) (P) und des Poly(arylethersulfons) (P2) {Gewichtsverhältnis (P)/[(P)+(P2)]} im Bereich von 0,70 bis 1 liegt und
- das Gewicht des teilaromatischen Polyesters (P*) gegenüber dem kombinierten Gewicht des teilaromatischen Polyesters (P*) und des teilaromatischen Polyesters (P2*) {Gewichtsverhältnis (P*)/[(P*)+(P2*)]} im Bereich von 0,70 bis 1 liegt.

2. Polymerzusammensetzung nach Anspruch 1, **dadurch gekennzeichnet, daß** sie ferner einen Verträglichkeitsvermittler (A) aus der Gruppe bestehend aus Polycarbonaten, Polyarylaten und Polyetherimiden enthält.

3. Polymerzusammensetzung nach Anspruch 1 oder 2, **dadurch gekennzeichnet, daß** die Polymerzusammensetzung (C) mindestens einen Verträglichkeitsvermittler (A) und mindestens einen teilaromatischen Polyester (P2*) umfaßt, wobei:
- der Verträglichkeitsvermittler (A) und der teilaromatische Polyester (P2*) miteinander verträglich sind,
- der Verträglichkeitsvermittler (A) mit dem Poly(arylethersulfon) (P) verträglich ist und
- der teilaromatische Polyester (P2*) mit dem teilaromatischen Polyester (P*) verträglich ist.

4. Polymerzusammensetzung nach Anspruch 3, **dadurch gekennzeichnet, daß** es sich bei dem Verträglichkeitsvermittler (A) um ein Polycarbonat handelt und es sich bei dem teilaromatischen Polyester (P2*) um ein Poly(ethylenterephthalat) handelt.

5. Polymerzusammensetzung nach einem der vorhergehenden Ansprüche, **dadurch gekennzeichnet, daß** das Gewichtsverhältnis (P*)/(P) zwischen 0,10 und 2 liegt.

6. Polymerzusammensetzung nach einem der vorhergehenden Ansprüche, **dadurch gekennzeichnet, daß** das Gewichtsverhältnis (P*)/(P) zwischen 0,30 und 1 liegt.

7. Polymerzusammensetzung nach einem der vorhergehenden Ansprüche, **dadurch gekennzeichnet, daß** es sich bei im wesentlichen allen Wiederholungseinheiten des Poly(arylethersulfons) (P) um Wiederholungseinheiten (R) der Formel: 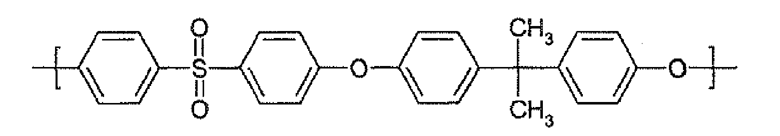 handelt und es sich bei im wesentlichen allen Wiederholungseinheiten des teilaromatischen Polyesters (P*) um Wiederholungseinheiten (R*) der Formel: 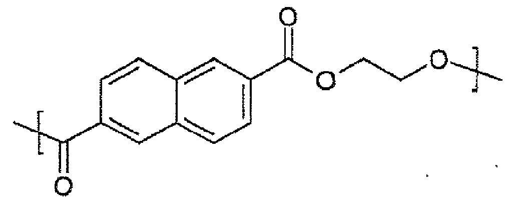 handelt.

8. Polymerzusammensetzung nach einem der vorhergehenden Ansprüche, **dadurch gekennzeichnet, daß** das Poly(arylethersulfon) (P) in der Polymerzusammensetzung (C) in einer Menge zwischen 30 Gew.- % und 85 Gew.- %, bezogen auf das Gesamtgewicht der Polymerzusammensetzung (C), enthalten ist und der teilaromatische Polyester (P*) in der Polymerzusammensetzung (C) in einer Menge zwischen 15 Gew.- % und 60 Gew.- %, bezogen auf das Gesamtgewicht der Polymerzusammensetzung (C), enthalten ist.

9. Formkörper (S), umfassend die Polymerzusammensetzung (C) nach einem der vorhergehenden Ansprüche.

10. Formkörper nach Anspruch 9, **dadurch gekennzeichnet, daß** es sich dabei um eine Kontaktlinse handelt.

11. Verwendung eines teilaromatischen Polyesters (P*) zur Verringerung der Wasserdampfdurchlässigkeit (Moisture Vapour Transmission Rate, MVTR) eines in einer Polymerzusammensetzung (C) enthaltenen Poly(arylethersulfons) (P),
wobei es sich bei mehr als 50 Mol- % der Wiederholungseinheiten des teilaromatischen Polyesters (P*) um Wiederholungseinheiten (R*) mit mindestens einer Estergruppe [-C(=O)O-], mindestens einer Alkylengruppe und mindestens einer Arylengruppe (Ar*), die mindestens zwei Benzolringe umfaßt, die jeweils mindestens 2 Kohlenstoffatome mit mindestens einem anderen Benzolring derselben Arylengruppe gemeinsam haben, handelt, und
es sich bei mehr als 50 Mol- % der Wiederholungseinheiten des Poly(arylethersulfons) (P) um Wiederholungseinheiten (R) mit mindestens einer Ethergruppe (-O-), mindestens einer Sulfongruppe (-SO₂-) und mindestens zwei Arylengruppen (Ar), die miteinander über ein sekundäres, ternäres oder quaternäres Kohlenstoffatom verbunden sind, handelt,
wobei das Gewichtsverhältnis von teilaromatischem Polyester (P*) gegenüber Poly(arylethersulfon) (P) [Gewichtsverhältnis (P*)/(P)] über 0,20 und unter 1 liegt.

12. Verwendung nach Anspruch 11, **dadurch gekennzeichnet, daß** die MVTR der Polymerzusammensetzung (C), gemessen nach der Methode ASTM F-1249 an einer 0,0625-Zoll-Platte, unter 3.10⁻² g/(100 in².24 Stunden) liegt und die Trübung der Polymerzusammensetzung (C), gemessen gemäß ASTM D-1003 an einer 0,0625-Zoll-Platte, unter 40 % liegt.

13. Verwendung nach Anspruch 11 oder 12, **dadurch gekennzeichnet, daß** :
- es sich bei im wesentlichen allen Wiederholungseinheiten des teilaromatischen Polyesters (P*) um Wiederholungseinheiten (R*) der Formel: 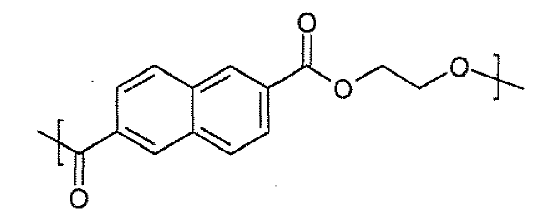 handelt,
- es sich bei im wesentlichen allen Wiederholungseinheiten des Poly(arylethersulfons) (P) um Wiederholungseinheiten (R) der Formel : 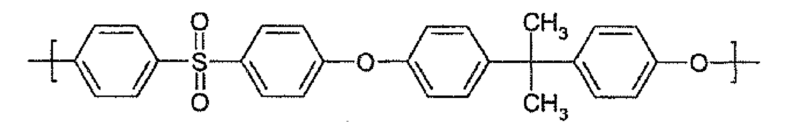 handelt.

14. Verwendung nach einem der Ansprüche 11 bis 13, **dadurch gekennzeichnet, daß** die Polymerzusammensetzung (C) mindestens einen Verträglichkeitsvermittler (A) und mindestens einen teilaromatischen Polyester (P2*) umfaßt, wobei der Verträglichkeitsvermittler (A) und der teilaromatische Polyester (P2*) miteinander verträglich sind, der Verträglichkeitsvermittler (A) mit dem Poly(arylethersulfon) (P) verträglich ist und der teilaromatische Polyester (P2*) mit dem teilaromatischen Polyester (P*) verträglich ist.

15. Verwendung nach Anspruch 14, **dadurch gekennzeichnet, daß** die Trübung der Polymerzusammensetzung (C), gemessen gemäß ASTM D-1003 an einer 0,0625-Zoll-Platte, unter 20 % liegt.

## Revendications

1. Composition de polymères (C) contenant :
- un poly(aryl éther sulfone) (P) dont plus de 50 % en mole des unités récurrentes sont des unités récurrentes (R) contenant au moins un groupe éther (-O-), au moins un groupe sulfone (-SO₂-) et au moins deux groupes arylènes (Ar) liés l'un à l'autre par un atome de carbone secondaire, ternaire ou quaternaire et
- un polyester semi-aromatique (P*) dont plus de 50 % en mole des unités récurrentes sont des unités récurrentes (R*) contenant au moins un groupe ester [-C(=O)O-], au moins un groupe alkylène et au moins un groupe arylène (Ar*) comprenant au moins deux noyaux benzéniques, chacun d'eux ayant au moins 2 atomes de carbone en commun avec au moins un autre noyau benzénique du même groupe arylène,
- facultativement de plus, au moins un poly(aryl éther sulfone) (P2) différent du poly(aryl éther sulfone) (P),
- facultativement de plus, au moins un polyester semi-aromatique (P2*) différent du polyester semi-aromatique (P*),
dans laquelle :
- le poids du polyester semi-aromatique (P*) sur le poids du poly(aryl éther sulfone) (P) [rapport pondéral (P*)/(P)] est compris entre 0,05 et 5,
- le poids du poly(aryl éther sulfone) (P) sur le poids combiné du poly(aryl éther sulfone) (P) et du poly(aryl éther sulfone) (P2) {rapport pondéral (P)/[(P) + (P2)]} va de 0,70 à 1 et
- le poids du polyester semi-aromatique (P*) sur le poids combiné du polyester semi-aromatique (P*) et du polyester semi-aromatique (P2*) {rapport pondéral (P*)/[(P*) + (P2*)]} va de 0,70 à 1.

2. Composition de polymères selon la revendication 1, **caractérisée en ce qu'**elle contient en outre un agent de compatibilité (A) choisi dans le groupe constitué par les polycarbonates, les polyarylates et les polyétherimides.

3. Composition de polymères selon la revendication 1 ou 2, **caractérisée en ce que** la composition de polymères (C) comprend au moins un agent de compatibilité (A) et au moins un polyester semi-aromatique (P2*), dans laquelle :
- l'agent de compatibilité (A) et le polyester semi-aromatique (P2*) sont compatibles l'un avec l'autre,
- l'agent de compatibilité (A) est compatible avec le poly(aryl éther sulfone) (P) et
- le polyester semi-aromatique (P2*) est compatible avec le polyester semi-aromatique (P*).

4. Composition de polymères selon la revendication 3, **caractérisée en ce que** l'agent de compatibilité (A) est un polycarbonate et le polyester semi-aromatique (P2*) est un poly(téréphtalate d'éthylène).

5. Composition de polymères selon l'une quelconque des revendications précédentes, **caractérisée en ce que** le rapport pondéral (P*)/(P) est compris entre 0,10 et 2.

6. Composition de polymères selon l'une quelconque des revendications précédentes, **caractérisée en ce que** le rapport pondéral (P*)/(P) est compris entre 0,30 et 1.

7. Composition de polymères selon l'une quelconque des revendications précédentes, **caractérisée en ce qu'**essentiellement toutes les unités récurrentes du poly(aryl éther sulfone) (P) sont des unités récurrentes (R) de formule : 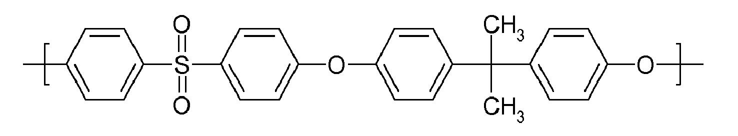 et essentiellement toutes les unités récurrentes du polyester semi-aromatique (P*) sont des unités récurrentes (R*) de formule :

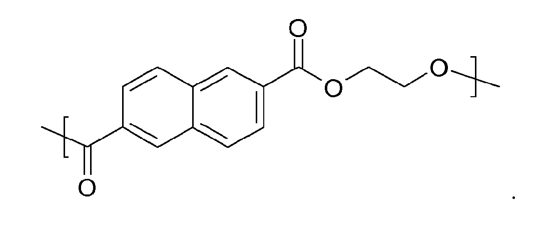

8. Composition de polymères selon l'une quelconque des revendications précédentes, **caractérisée en ce que** le poly(aryl éther sulfone) (P) est contenu dans la composition de polymères (C) en une quantité comprise entre 30 % en poids et 85 % en poids, sur la base du poids total de la composition de polymères (C), et le polyester semi-aromatique (P*) est contenu dans la composition de polymères (C) en une quantité comprise entre 15 % en poids et 60 % en poids, sur la base du poids total de la composition de polymères (C).

9. Article façonné (S) comprenant la composition de polymères (C) selon l'une quelconque des revendications précédentes.

10. Article façonné selon la revendication 9, **caractérisé en ce qu'**il est une lentille de contact.

11. Utilisation d'un polyester semi-aromatique (P*) pour réduire le taux de perméabilité à la vapeur d'eau (MVTR) d'un poly(aryl éther sulfone) (P) compris dans une composition de polymères (C),
plus de 50 % en mole des unités récurrentes dudit polyester semi-aromatique (P*) étant des unités récurrentes (R*) contenant au moins un groupe ester [-C(=O)O-], au moins un groupe alkylène et au moins un groupe arylène (Ar*) comprenant au moins deux noyaux benzéniques, chacun d'eux ayant au moins 2 atomes de carbone en commun avec au moins un autre noyau benzénique du même groupe arylène et
plus de 50 % en mole des unités récurrentes dudit poly(aryl éther sulfone) (P) étant des unités récurrentes (R) contenant au moins un groupe éther (-O-), au moins un groupe sulfone (-SO₂-) et au moins deux groupes arylènes (Ar) liés l'un à l'autre par un atome de carbone secondaire, ternaire ou quaternaire, dans laquelle le rapport pondéral du polyester semi-aromatique (P*) sur le poly(aryl éther sulfone) (P) [rapport pondéral (P*)/(P)] est au-dessus de 0,20 et au-dessous de 1.

12. Utilisation selon la revendication 11, **caractérisée en ce que** le MVTR de la composition de polymères (C), mesuré selon la méthode ASTM F-1249 sur une plaque de 0,0625 pouce, est au-dessous de 3,10⁻² g/(100 pouces².24 heures) et le voile de la composition de polymères (C), mesuré selon la méthode ASTM D-1003 sur une plaque de 0,0625 pouce, est au-dessous de 40 %.

13. Utilisation selon la revendication 11 ou 12, **caractérisée en ce que** :
- essentiellement toutes les unités récurrentes du polyester semi-aromatique (P*) sont des unités récurrentes (R*) représentées par la formule : 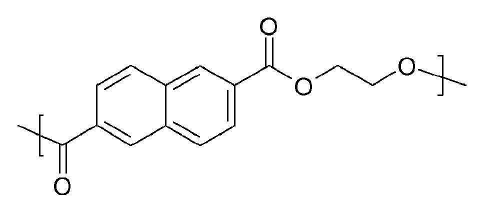
- essentiellement toutes les unités récurrentes du poly(aryl éther sulfone) (P) sont des unités récurrentes (R) représentées par la formule :

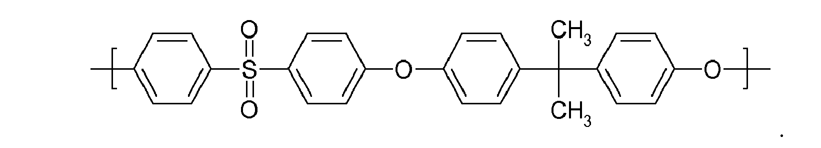

14. Utilisation selon l'une quelconque des revendications 11 à 13, **caractérisée en ce que** la composition de polymères (C) comprend au moins un agent de compatibilité (A) et au moins un polyester semi-aromatique (P2*), ledit agent de compatibilité (A) et ledit polyester semi-aromatique (P2*) étant compatibles l'un avec l'autre, ledit agent de compatibilité (A) étant compatible avec le poly(aryl éther sulfone) (P) et ledit polyester semi-aromatique (P2*) étant compatible avec le polyester semi-aromatique (P*).

15. Utilisation selon la revendication 14, **caractérisée en ce que** le voile de la composition de polymères (C), mesuré selon la méthode ASTM D-1003 sur une plaque de 0,0625 pouce, est au-dessous de 20 %.
